# EUROPÄISCHE PATENTSCHRIFT

(11) **EP 3 681 109 B1**
(45) Veröffentlichungstag und Bekanntmachung des Hinweises auf die Patenterteilung: **09.10.2024**
(21) Anmeldenummer: 19151480.1
(22) Anmeldetag: 11.01.2019
(51) Int. Cl.: H04L 12/40, H04L 12/403, H04L 67/12, E05B 47/00

(54) **VERFAHREN ZUM ERKENNEN EINES ZUSTANDS EINES TEILNEHMERS EINES KOMMUNIKATIONSBUSSES, KOMMUNIKATIONSBUSSYSTEM, VERRIEGELUNGSANLAGE MIT EINEM KOMMUNIKATIONSBUSSYSTEM UND TRANSCEIVER**
METHOD FOR DETECTING A STATE OF A SUBSCRIBER OF A COMMUNICATION BUS, COMMUNICATION BUS SYSTEM, LOCKING SYSTEM WITH A COMMUNICATION BUS SYSTEM AND TRANSCEIVER
PROCÉDÉ DE DÉTECTION D'UNE CONDITION D'UN PARTICIPANT DANS UN BUS DE COMMUNICATION, SYSTÈME DE BUS DE COMMUNICATION, SYSTÈME DE VERROUILLAGE DOTÉ D'UN SYSTÈME DE BUS DE COMMUNICATION ET ÉMETTEUR-RÉCEPTEUR

(43) Veröffentlichungstag der Anmeldung: 15.07.2020
(73) Patentinhaber: dormakaba Deutschland GmbH, 58256 Ennepetal (DE)
(72) Erfinder: BOEKHOFF, Martin, 58256 Ennepetal (DE)
(74) Vertreter: Balder IP Law, S.L.

(56) Entgegenhaltungen:
- EP-A1- 2 439 885
- WO-A1-2015/138740
- CN-A- 107 168 074
- DE-A1- 10 257 721
- US-A1- 2006 197 717

## Beschreibung

Die Erfindung betrifft ein Verfahren zum Erkennen eines Zustands eines Teilnehmers eines Kommunikationsbusses. Der Zustand kann insbesondere einer Verfügbarkeit entsprechen. Der Kommunikationsbus kann einen dominanten oder einen rezessiven Zustand annehmen. Ein weiterer Gegenstand der Erfindung ist ein Kommunikationsbussystem. Ferner betrifft die Erfindung eine Verriegelungsanlage mit einem erfindungsgemäßen Kommunikationsbussystem sowie einen Transceiver für einen Teilnehmer eines Kommunikationsbusses.

Anwendung finden kann die Erfindung beispielsweise bei Verriegelungsanlagen, die mehrere Einrichtungen aufweisen, die über einen Kommunikationsbus miteinander verbunden sind. Typischerweise umfassen derartige Verriegelungsanlagen Einrichtungen in Form von Türverriegelungseinheiten und Steuereinheiten zum Steuern und/oder Betätigen der Türverriegelungseinheiten. Beispielsweise kann eine Steuereinheit als Nottaster ausgestaltet sein, bei dessen Betätigung eine oder mehrere der an dem Kommunikationsbus angeschlossenen Türverriegelungseinheiten freigegeben d. h. entriegelt werden. Bei derartigen Verriegelungsanlagen besteht die Anforderung, einen Ausfall einer Einrichtung der Verriegelungsanlage innerhalb kurzer Zeit erkennen zu können. Wird ein Ausfall einer Einrichtung erkannt, können dann geeignete Maßnahmen eingeleitet werden, beispielsweise um zu verhindern, dass ein Raum unerwünschter Weise verschlossen bleibt. Hierbei wird insbesondere die Türverriegelungseinheit in einen Freigabezustand überführt.

In diesem Zusammenhang ist aus der EP 2 439 885 A1 ein Verfahren zur digitalen Kommunikation zwischen mindestens einem ersten Knoten und einer Vielzahl von zweiten Knoten, die mit dem ersten Knoten über einen Feldbus verbunden sind, bekannt. Es wird ein Anwesenheitserkennungsschema zur Überprüfung des Betriebszustands der zweiten Knoten durch den ersten Knoten integrativ mit einer Nachrichtenabfrage kombiniert, um einen effektiven ersten Modus der digitalen Kommunikation zwischen den genannten Knoten bereitzustellen, der sehr effektiv genutzt werden kann, um einen von Nachrichtenprioritäten unabhängigen Kommunikationskanal bereitzustellen. Der erste Modus der digitalen Kommunikation wird mit einem zweiten Modus der digitalen Kommunikation kombiniert, der auf Nachrichtenprioritäten von digitalen Nachrichten basiert, die von einem jeweiligen zweiten Knoten an den ersten Knoten zu senden sind. Es kann ein bitweiser Buszugriffsarbitrierungsmechanismus für die Implementierung dieser Kommunikationsmodi verwendet werden.

Aus dem Dokument US 2006/0197717 A1 ist ein Verfahren zur Übertragung von Daten von einer Vielzahl von Slave-Terminals zu einem Master-Terminal über einen Kommunikationsbus bekannt. Das Verfahren umfasst die folgenden Schritte: (a) Das Master-Terminal sendet eine Prüfsequenz mit einer Antwortsequenz, die dazu dient, von den Slave-Terminals einen Indikator für das Vorhandensein von zu übertragenden Daten zu empfangen, (b) die Slave-Terminals liefern den genannten Anwesenheitsindikator in der genannten Antwortsequenz, (c) das Master-Terminal erteilt einem Slave-Terminal, bei dem der Indikator für das Vorhandensein von zu übertragenden Daten positiv ist, eine Datenübertragungsberechtigung, (d) das Slave-Terminal sendet die Daten nach Erhalt der Autorisierung vom Master-Terminal, (e) die Schritte (c) und (d) werden für jedes Slave-Endgerät wiederholt, dessen Indikator für das Vorhandensein von zu übertragenden Daten positiv ist. Das Verfahren findet auf Kraftfahrzeug-Klimaanlagen Anwendung.

Aus dem Dokument WO 2015/138740 A1 ist ein Bluetooth/WiFi-Brückensystem bekannt. Eine oder mehrere Brücken befinden sich in einer Wohnung. Jede Brücke enthält ein Computergerät in einer Wohnung mit einem dem Internet zugewandten Funkgerät und einem zweiten Funkgerät, das mit einem oder mehreren Bluetooth LE-Geräten kommuniziert. Ein oder mehrere Bluetooth-Geräte oder Bluetooth-Peripheriegeräte, zusammengenommen Bluetooth-Geräte, stehen in Kommunikation mit der Brücke. Ein intelligentes Türschlosssystem steht in Kommunikation mit der Brücke und dem einen oder den mehreren Bluetooth-Geräten.

Dokument CN 107 168 074 A stellt ein Verfahren und System zur Steuerung eines intelligenten Hauses bereit. Das System umfasst Tastensteuermodule, Ausgangsausführungsmodule, ein Sensormodul zur Erkennung von Umgebungsparametern, ein Ventilsteuermodul, ein Türschlosssteuermodul und ein Netzwerkmodul. Die Tastensteuermodule werden zur Steuerung von Haushaltsgeräten eines starken elektrischen Kanaltyps durch Tasten verwendet. Die Ausgangsausführungsmodule sind entsprechend mit den Tastensteuermodulen durch Konfiguration verbunden und werden verwendet, um Schlüsselinformationen von den Tastensteuermodulen zu erhalten, die Schlüsselinformationen auszuführen und die Tastensteuermodule über empfangene Schlüsselsteuerinformationen zu informieren. Das Netzwerkmodul wird dazu verwendet, die Ausgangssignale der anderen Module über ein Weitverkehrsnetz an mindestens ein Steuerungsende zu senden. Die Schlüsselsteuermodule, die Ausgangsausführungsmodule, das Umgebungsparametererfassungssensormodul, das Ventilsteuermodul, das Türschlosssteuermodul und das Netzwerkmodul kommunizieren über einen CAN-Bus miteinander. Gemäß dem Smart-Home-Steuerungsverfahren und -system wird ein CAN-Bus-Daten-Broadcast-Kommunikationsmodus angenommen.

Dokument DE 102 57 721 A1 betrifft ein Steuerungssystem für eine Türanlage, beinhaltend einen Mikroprozessor, der Schnittstellen für Steuerungssystem-interne und Steuerungssystemexterne Bussysteme aufweist zum Anschluss von Modulen und Sensoren, wobei mindestens drei verschiedenartige Schnittstellen für den wahlweisen Anschluss von drei unterschiedlich leistungsfähigen Arten/Stufen von Steuerungssystem-internen und Steuerungssystem-externen aber Mikroprozessor-externen Bussystemen vorgesehen sind, wobei an mindestens einer der Schnittstellen der jeweilige gewünschte Bus im Betrieb aufgeschaltet ist. Die mindestens drei Schnittstellen beinhalten dabei eine UN-Schnittstelle zum Anschluss eines Steuerungssystem-internen einfachen UN-Busses, eine CAN-Schnittstelle zum Anschluss eines Steuerungssystem-internen höherwertigen CAN-Busses, und eine weitere Schnittstelle zum Anschluss an ein Steuerungssystem-externes übergeordnetes Datennetz. Das Türsteuerungsmodul kann individuell an den Anwendungsfall angepasst werden und wahlweise kann entschieden werden, welcher Bus benutzt werden soll.

Vor diesem Hintergrund stellt sich die Aufgabe, den Zustand, insbesondere die Verfügbarkeit, von Teilnehmern eines Kommunikationsbusses in einer möglichst kurzen Zeitspanne zu ermitteln.

Die Lösung der Aufgabe erfolgt durch die Merkmale der unabhängigen Ansprüche. Die abhängigen Ansprüche haben vorteilhafte Ausgestaltungen der Erfindung zum Gegenstand. Merkmale und Details, die in Zusammenhang mit dem erfindungsgemäßen Verfahren beschrieben sind, gelten dabei auch im Zusammenhang mit dem erfindungsgemäßen Kommunikationsbussystem und/oder dem erfindungsgemäßen Transceiver und umgekehrt.

Dabei können die in der Beschreibung und in den Ansprüchen erwähnten Merkmale jeweils einzeln für sich oder in Kombination erfindungswesentlich sein. Insbesondere wird ein Verfahren unter Schutz gestellt, das mit einem erfindungsgemäßen Kommunikationsbussystem, insbesondere mit einem Kommunikationsbussystem nach Anspruch 11 oder 12, ausführbar ist, sowie ein Kommunikationsbussystem, auf dem ein erfindungsgemäßes Verfahren, insbesondere ein Verfahren nach einem der Ansprüche 1 bis 10 ausführbar ist.

Zur Lösung der Aufgabe wird ein Verfahren zum Erkennen eines Zustands, insbesondere einer Verfügbarkeit, eines Teilnehmers eines Kommunikationsbusses, der einen dominanten oder einen rezessiven Zustand einnehmen kann, vorgeschlagen mit den folgenden Verfahrensschritten:
- ein erster Teilnehmer des Kommunikationsbusses sendet eine Zustandserkennungs-Nachricht über den Kommunikationsbus, wobei die Zustandserkennungs-Nachricht einen Datenbereich umfasst, wobei der Datenbereich zumindest ein Teilnehmer-Bit aufweist, das einem zweiten Teilnehmer des Kommunikationsbusses zugeordnet ist und das Teilnehmer-Bit auf den rezessiven Zustand gesetzt wird,
- ein zweiter Teilnehmer des Kommunikationsbusses empfängt die Zustandserkennungs-Nachricht und setzt das zumindest eine Teilnehmer-Bit, das dem zweiten Teilnehmer zugeordnet ist, auf den dominanten Zustand, während der zweite Teilnehmer die Zustandserkennungs-Nachricht empfängt,
- der erste Teilnehmer und/oder ein dritter Teilnehmer des Kommunikationsbusses empfängt die Zustandserkennungs-Nachricht und bestimmt anhand des Teilnehmer-Bits den Zustand des zweiten Teilnehmers.

Bei der Zustandserkennungs-Nachricht kann es sich insbesondere um eine Verfügbarkeitserkennungs-Nachricht handeln. Der erste Teilnehmer kann als Master-Teilnehmer ausgebildet sein. Der Begriff Teilnehmer des Kommunikationsbusses ist derart zu verstehen, dass der Teilnehmer mit dem Kommunikationsbus verbunden ist. Ein Kommunikationsbussystem umfasst den Kommunikationsbus und die Teilnehmer des Kommunikationsbusses.

Bei dem erfindungsgemäßen Verfahren sendet ein erster Teilnehmer, der auch als Master-Teilnehmer bezeichnet wird, eine Zustandserkennungs-Nachricht, insbesondere eine Verfügbarkeitserkennungs-Nachricht, mit einem Datenbereich, der zumindest ein Teilnehmer-Bit umfasst. Bevorzugt umfasst der Datenbereich eine Vielzahl von Teilnehmer-Bits. Das Teilnehmer-Bit ist einem - a priori bekannten - zweiten Teilnehmer des Kommunikationsbusses zugeordnet und wird von dem ersten Teilnehmer auf den rezessiven Zustand gesetzt. Bevorzugt ist die Vielzahl der Teilnehmer-Bits jeweils a priori bekannten Teilnehmern zugeordnet. Der zweite Teilnehmer des Kommunikationsbusses empfängt die Zustandserkennungs-Nachricht und setzt das ihm zugeordnete Teilnehmer-Bit in dem Datenbereich der Zustandserkennungs-Nachricht in den dominanten Zustand. Hierdurch erfolgt eine Rückmeldung des zweiten Teilnehmers über den Zustand des zweiten Teilnehmers. Insbesondere meldet der zweite Teilnehmer hierdurch zurück, dass der zweite Teilnehmer verfügbar und somit nicht ausgefallen ist.

Die Zustandserkennungs-Nachricht kann durch den ersten Teilnehmer empfangen werden. Alternativ oder zusätzlich kann durch einen dritten Teilnehmer des Kommunikationsbusses die Zustandserkennungs-Nachricht empfangen werden. In der ersten Alternative ist ein dritter Teilnehmer des Kommunikationsbusses nicht zwingend notwendig. So kann in der ersten Alternative das Kommunikationssystem frei von dem dritten Teilnehmer ausgestaltet sein. Besonders bevorzugt lesen der erste und/oder der dritte Teilnehmer die Zustandserkennungs-Nachricht, während die Zustandserkennungs-Nachricht gesendet wird.

Bevorzugt ist die Zustandserkennungs-Nachricht auf dem Kommunikationsbus durch sämtliche Teilnehmer lesbar. Besonders bevorzugt lesen die Teilnehmer die Zustandserkennungs-Nachricht, während die Zustandserkennungs-Nachricht gesendet wird.

Der die Zustandserkennungs-Nachricht empfangene Teilnehmer kann die Verfügbarkeitserkennungs-Nachricht, insbesondere die Teilnehmer-Bits der Verfügbarkeitserkennungs-Nachricht auswerten und den Zustand des zweiten Teilnehmers ermitteln. Insbesondere wird ermittelt, ob der zweite Teilnehmer des Kommunikationsbusses verfügbar oder ausgefallen ist. Das erfindungsgemäße Verfahren bietet somit den Vorteil, dass mittels lediglich einer einzigen über den Kommunikationsbus übertragenen Verfügbarkeitserkennungs-Nachricht die Verfügbarkeit des zweiten Teilnehmers des Kommunikationsbus ermittelt werden kann, obwohl der zweite Teilnehmer nicht die Zustandserkennungs-Nachricht gesendet hat, sondern der zweite Teilnehmer hat die Zustandserkennungs-Nachricht nur, während der erste Teilnehmer die Zustandserkennungsnachricht sendet, geändert. Zudem kann dadurch, dass der erste Teilnehmer die Zustandserkennungs-Nachricht sendet und der zweite Teilnehmer dieselbe Zustandserkennungsnachricht ändert, der Zustand, insbesondere die Verfügbarkeit, des ersten und des zweiten Teilnehmers durch nur eine Nachricht erfasst werden. Auf diese Weise wird eine schnelle, die Auslastung des Kommunikationsbusses nur wenig beeinträchtigende Möglichkeit geschaffen, den Zustand von Teilnehmern des Kommunikationsbusses zu ermitteln.

Handelt es sich bei dem Zustand um die Verfügbarkeit, so kann schnell geprüft werden, ob das Kommunikationsbussystem intakt ist oder ob eine Notfallmaßnahme eingeleitet werden muss. Alternativ kann es sich bei dem Zustand z. B. um den Zustand einer Türverriegelungseinheit, insbesondere um einen Verriegelungszustand oder einen Freigabezustand, oder um den Zustand einer Tür, insbesondere um einen Öffnungszustand oder einen Schließzustand, handeln. Hierdurch ist es einfach und ohne hohe Auslastung des Kommunikationsbusses möglich, die Schließ- oder Verriegelungszustände zu erfassen. Dieses kann insbesondere bei der Steuerung von einer oder mehreren Schleusen von Vorteil sein.

Die Stellung des Teilnehmer-Bits in der Zustandserkennungs-Nachricht ist a priori dem zweiten Teilnehmer bekannt. Hierdurch ist es dem zweiten Teilnehmer möglich, das Teilnehmer-Bit auf den dominanten Zustand zu setzen, während der erste Teilnehmer die Zustandserkennungs-Nachricht zu senden und der zweite Teilnehmer die Zustandserkennungsnachricht empfängt. Bei dem Setzen des Teilnehmer-Bits ändert insbesondere der zweite Teilnehmer die an dem Kommunikationsbus angelegte Spannung. Die Spannungsänderung erfolgt an der für das Teilnehmer-Bit vorgesehenen Stellung. Die Spannungsänderung erfolgt innerhalb der derzeit gesendeten Zustandserkennungs-Nachricht. Dadurch, dass der erste und/oder der dritte Teilnehmer zum Empfangen der Zustandserkennungs-Nachricht die an den Kommunikationsbus angelegte Spannung abgreift, können der erste und/oder der dritte Teilnehmer das Teilnehmer-Bit, wie es von dem zweiten Teilnehmer gesetzt ist, innerhalb der von dem ersten Teilnehmer gesendeten Zustandserkennungsnachricht empfangen.

Bevorzugt ist der Kommunikationsbus als serieller Kommunikationsbus ausgebildet, so dass die Kommunikation zwischen den Teilnehmern mit geringem Verdrahtungsaufwand ermöglicht werden kann.

Gemäß einer vorteilhaften Ausgestaltung der Erfindung umfasst die Zustandserkennungs-Nachricht einen Header und der zweite Teilnehmer detektiert die Zustandserkennungs-Nachricht anhand des Headers. Bevorzugt wird der Header vor dem Datenbereich übertragen, so dass die Detektion der Zustandserkennungs-Nachricht abgeschlossen sein kann, bevor der Datenbereich der Zustandserkennungs-Nachricht auf dem Kommunikationsbus anliegt. Der Header kann eine eindeutige Bitfolge enthalten, die der Zustandserkennungs-Nachricht zugeordnet ist, so dass die Zustandserkennungs-Nachricht von anderen über den Kommunikationsbus übertragenen Nachrichten unterschieden werden kann.

Der zweite Teilnehmer setzt das Teilnehmer-Bit, das dem zweiten Teilnehmer zugeordnet ist, auf den dominanten Zustand innerhalb derjenigen Zustandserkennungs-Nachricht, die von dem ersten Teilnehmer gesendet wird und den Header umfasst. Somit ändert der zweite Teilnehmer die Zustandserkennungs-Nachricht des ersten Teilnehmers während des Sendens durch den ersten Teilnehmer und/oder während des Empfangs der Zustandserkennungs-nachricht durch den zweiten Teilnehmer. Der Header der Zustandserkennungsnachricht fordert den zweiten Teilnehmer auf, den Datenbereich derselben Zustandserkennungs-Nachricht zu ändern.

Eine vorteilhafte Ausgestaltung der Erfindung sieht vor, dass der zweite Teilnehmer durch den ersten Teilnehmer und/oder den dritten Teilnehmer als verfügbar bestimmt wird, wenn das dem zweiten Teilnehmer zugeordnete Teilnehmer-Bit auf den dominanten Zustand gesetzt ist. Insofern kann die Rückmeldung des zweiten Teilnehmers, die durch das Setzen des ihm zugeordnete Teilnehmer-Bits auf den dominanten Zustand erfolgt, als Rückmeldung seiner Verfügbarkeit aufgefasst werden. Hierbei kann eine nicht erfolgende Rückmeldung eines Teilnehmers des Kommunikationsbusses als mangelnde Verfügbarkeit bzw. als Ausfall dieses Teilnehmers aufgefasst werden.

Bevorzugt ist es, wenn mehrere Teilnehmer des Kommunikationsbusses die Zustandserkennungs-Nachricht empfangen und jeweils zumindest ein ihnen zugeordnetes Teilnehmer-Bit auf den dominanten Zustand setzen. Das Setzen des Teilnehmer-Bits erfolgt insbesondere, während der erste Teilnehmer die Zustandserkennungsnachricht sendet. Es sind neben dem ersten Teilnehmer somit mehrere weitere Teilnehmer vorhanden, die während des Empfangs der Zustandserkennungs-Nachricht die Zustandserkennungs-Nachricht ändern. Der Datenbereich umfasst hierbei für jeden der derart handelnden Teilnehmer zumindest ein zugeordnetes Teilnehmer-Bit. Hierdurch kann der Datenverkehr auf dem Kommunikationsbus besonders eingeschränkt werden. Der Datenbereich umfasst bevorzugt eine a-priori bekannte Anzahl an Teilnehmer-Bits, so dass den Teilnehmern des Kommunikationsbusses eine feste Zuordnung der Teilnehmer-Bits zu den jeweiligen Teilnehmern bekannt sein kann. Eine derartige Zuordnung kann beispielsweise in einem Speicher des jeweiligen Teilnehmers hinterlegt sein. Ebenfalls kann jeweils die Stellung der zugeordneten Teilnehmer-Bits in der Zustandserkennungs-Nachricht in einem Speicher des jeweiligen Teilnehmers hinterlegt sein. Somit weiß jeder derart handelnde Teilnehmer, an welcher Stellung er das ihm zugeordnete Teilnehmer-Bit innerhalb der Zustandserkennungs-Nachricht zu ändern hat. Die Stellung des Teilnehmer-Bits kann in dem Speicher des jeweiligen Teilnehmers hinterlegt sein.

Es kann sein, dass zumindest einer der Teilnehmer des Kommunikationsbusses die Zustandserkennungs-Nachricht empfängt und anhand der gesetzten Teilnehmer-Bits den Zustand, insbesondere die Verfügbarkeit, derjenigen Teilnehmer, die die jeweiligen Teilnehmer-Bits auf den dominanten Zustand gesetzt haben, bestimmt. Bevorzugt bestimmen mehrere Teilnehmer des Kommunikationsbusses anhand der gesetzten Teilnehmer-Bits den Zustand, insbesondere die Verfügbarkeit, derjenigen Teilnehmer, die die jeweiligen Teilnehmer-Bits auf den dominanten Zustand gesetzt haben.

Der Teilnehmer, der den Zustand des oder der anderen Teilnehmer bestimmt, kann selber einem Teilnehmer-Bit zugeordnet sein und das ihm zugeordnete Teilnehmer-Bit auf den dominanten Zustand setzen. Der Teilnehmer, der den Zustand des oder der anderen Teilnehmer bestimmt, kann damit den eigenen Zustand, insbesondere die eigene Verfügbarkeit, in der Zustandserkennungs-Nachricht kenntlich machen.

Alternativ ist dem den Zustand des oder der anderen Teilnehmer bestimmenden Teilnehmer kein Teilnehmer-Bit zugeordnet. D.h. der den Zustand des oder der anderen Teilnehmer bestimmenden Teilnehmer ändert nicht die Zustandserkennungs-Nachricht. Der Teilnehmer beschränkt sich in Bezug auf die Zustandserkennungs-Nachricht somit auf das Bestimmen der Zustände desjenigen oder derjenigen anderen Teilnehmer, die das ihnen zugeordnete Teilnehmer-Bit in den dominanten Zustand setzen können.

Besonders bevorzugt empfangen mehrere Teilnehmer des Kommunikationsbusses die Zustandserkennungs-Nachricht und setzen jeweils das zumindest eine ihnen jeweils zugeordnete Teilnehmer-Bit auf den dominanten Zustand und bestimmen anhand des Teilnehmer-Bits eines anderen Teilnehmers dessen Zustand. Das Setzen des dominanten Bits erfolgt dabei insbesondere während des Empfangs der Zustandserkennungs-Nachricht. Bevorzugt werden von mehreren Teilnehmern deren Zustände bestimmt. Es kann sein, dass alle Teilnehmer des Kommunikationsbusses anhand aller gesetzten Teilnehmer-Bits den Zustand, insbesondere die Verfügbarkeit, der zugeordneten Teilnehmer bestimmen. Es kann sein, dass alle Teilnehmer des Kommunikationsbusses oder alle Teilnehmer mit Ausnahme des ersten Teilnehmers jeweils zumindest ein ihnen zugeordnetes Teilnehmer-Bit auf den dominanten Zustand während des Empfangs der Zustandserkennungs-Nachricht setzen.

Es ist denkbar, dass die Teilnehmer des Kommunikationsbusses in Gruppen aufteilbar sind. Insbesondere kann eine Gruppe von Teilnehmern eine ähnliche oder im Wesentlichen identische Funktion in dem Kommunikationsbussystem haben. So kann eine Gruppe von Teilnehmern z. B. Betätigungselemente, insbesondere Nottaster, der Verriegelungsanlage entsprechen. Eine andere Gruppe von Teilnehmern kann z. B. Verriegelungseinrichtungen der Verriegelungsanlage entsprechen.

Der Datenbereich der Zustandserkennungs-Nachricht kann in mehrere Wörter unterteilt sein. Die Wörter können jeweils mehrere Teilnehmer-Bits umfassen. Zumindest ein Teil der Wörter kann jeweils einer Gruppe von Teilnehmern zugeordnet sein. Die Teilnehmer einer Gruppe können jeweils als zweite Teilnehmer bezeichnet werden. Die Teilnehmer einer weiteren Gruppe können jeweils als dritte Teilnehmer bezeichnet werden.

So ist es möglich, dass mehrere zweite Teilnehmer des Kommunikationsbusses die Zustandserkennungs-Nachricht empfangen und jeweils zumindest ein ihnen zugeordnetes Teilnehmer-Bit auf den dominanten Zustand setzen. Der erste Teilnehmer und/oder der dritte Teilnehmer bestimmen anhand der Teilnehmer-Bits die Verfügbarkeit der mehreren zweiten Teilnehmer. Bei einer derartigen Ausgestaltung kann die Verfügbarkeit mehrerer Teilnehmer des Kommunikationsbusses anhand derselben Zustandserkennungs-Nachricht erfolgen. Ferner kann ein weiterer zweiter Teilnehmer durch den ersten Teilnehmer und/oder den dritten Teilnehmer als nicht verfügbar - also als ausgefallen - bestimmt werden, wenn das dem weiteren zweiten Teilnehmer zugeordnete Teilnehmer-Bit auf den rezessiven Zustand gesetzt ist. Es kann sein, dass ein zweiter Teilnehmer kann anhand der Teilnehmer-Bits den Zustand zumindest eines weiteren, zweiten Teilnehmers bestimmt.

Eine vorteilhafte Ausgestaltung sieht vor, dass der Datenbereich ein Paritäts-Bit umfasst und der erste Teilnehmer das von dem zweiten Teilnehmer gesetzte Teilnehmer-Bit empfängt und in Abhängigkeit von dem empfangenen Teilnehmer-Bit das Paritäts-Bit setzt. Das Paritäts-Bit kann die Erkennung von Fehlern beim Senden, Übertragen und/oder Empfangen der Zustandserkennungs-Nachricht über den Kommunikationsbus ermöglichen. Dadurch, dass der erste Teilnehmer das Paritäts-Bit setzt, können unerwünschte Kollisionen beim Setzen des Paritäts-Bits verhindert werden. Zudem kann auf diese Weise eine Rückbestätigung erfolgen, die belegt, dass die von den einzelnen zweiten Teilnehmern des Kommunikationsbusses gesetzten Teilnehmer-Bits durch den ersten Teilnehmer korrekt erkannt wurden. Das Paritäts-Bit wird von dem ersten Teilnehmer als Teil der Zustandserkennungs-Nachricht gesendet. Hierbei handelt es sich um dieselbe Zustandserkennungs-Nachricht, in der der zweite Teilnehmer das dem zweiten Teilnehmer zugeordnete Teilnehmer-Bit auf den dominanten Zustand gesetzt hat. Somit wird das Paritäts-Bit während des Sendens der Zustandserkennungs-Nachricht dem gesetzten Teilnehmer-Bit angepasst. Sind mehrere Teilnehmer-Bits durch Teilnehmer, die nicht dem ersten Teilnehmer entsprechen, gesetzt worden, so wird die Zustandserkennungsnachricht den mehreren gesetzten Teilnehmer-Bits angepasst. Das Paritäts-Bit dient dazu, den Datenbereich oder ein Wort des Datenbereichs als gültig zu kennzeichnen.

Bevorzugt umfasst die Zustandserkennungs-Nachricht alternativ oder zusätzlich ein Prüf-Wort, insbesondere ein LRC-Wort (longitudinal redundancy check-Wort), eine Checksumme oder ein CRC-Wort (cyclic redundancy check-Wort), und der erste Teilnehmer empfängt das von dem zweiten Teilnehmer gesetzte Teilnehmer-Bit und setzt das Prüf-Wort in Abhängigkeit von dem empfangenen Teilnehmer-Bit. Das Prüf-Wort ist bevorzugt am Ende der Zustandserkennungs-Nachricht, insbesondere nach dem Datenbereich der Zustandserkennungs-Nachricht, vorgesehen. Hierbei handelt es sich um dieselbe Zustandserkennungs-Nachricht, in der der zweite Teilnehmer das dem zweiten Teilnehmer zugeordnete Teilnehmer-Bit auf den dominanten Zustand gesetzt hat. Somit wird das Prüf-Wort während des Sendens der Zustandserkennungs-Nachricht dem gesetzten Teilnehmer-Bit bzw. den gesetzten Teilnehmer-Bits angepasst. Sind mehrere Teilnehmer-Bits durch Teilnehmer, die nicht dem ersten Teilnehmer entsprechen, gesetzt worden, so wird die Zustandserkennungsnachricht den mehreren gesetzten Teilnehmer-Bits angepasst. Das Prüf-Wort dient dazu die Zustandserkennungs-Nachricht als gültig zu kennzeichnen.

Eine vorteilhafte Ausgestaltung des erfindungsgemäßen Verfahrens sieht vor, dass der erste Teilnehmer die Zustandserkennungs-Nachricht periodisch sendet. Hierdurch kann eine quasi-kontinuierliche Überwachung des Kommunikationsbusses auf Ausfälle von Teilnehmern ermöglicht werden. Beispielsweise kann die Zustandserkennungs-Nachricht durch den ersten Teilnehmer in einem vorgegebenen identischen Abstand gesendet werden, insbesondere in einem Abstand von 1 s oder 100 ms, oder 10 ms oder 1 ms.

Vorteilhaft ist eine Ausgestaltung, bei welcher der Datenbereich mehrere, insbesondere genau zwei, Teilnehmer-Bits aufweist, die dem zweiten Teilnehmer zugeordnet sind und durch den ersten Teilnehmer auf den rezessiven Zustand gesetzt werden, wobei der zweite Teilnehmer die mehrere Teilnehmer-Bits identisch auf den dominanten Zustand setzt. Durch das mehrfache Setzen von Teilnehmer-Bits kann Redundanz bereitgestellt werden, so dass die Wahrscheinlichkeit von Fehlern bei der Bestimmung der Verfügbarkeit des zweiten Teilnehmers reduziert wird. Sind bei dem Verfahren mehrere Teilnehmer, die jeweils Teilnehmer-Bits in den dominanten Zustand setzen, insbesondere mehrere zweite Teilnehmer, vorhanden, so weist der Datenbereich bevorzugt pro Teilnehmer jeweils mehrere, insbesondere zwei, Teilnehmer-Bits auf und jeder der Teilnehmer setzt die ihm zugeordneten Teilnehmer-Bits auf den dominanten Zustand.

Es kann sein, dass ein Teilnehmer des Kommunikationsbusses Kenntnis von einem Zustand, insbesondere einer Verfügbarkeit, einer Vorrichtung außerhalb des Kommunikationsbus hat. Anders ausgedrückt, ist die Vorrichtung kein Teilnehmer des Kommunikationsbusses.

Bei der Vorrichtung kann es sich z. B. um eine weitere Vorrichtung der Verriegelungsanlage handeln. Der Zustand, insbesondere die Verfügbarkeit, der Vorrichtung kann für die Teilnehmer des Kommunikationsbusses relevant sein. Bei der Vorrichtung kann es sich z. B. um einen zentralen Nottaster oder um einen Gefahrenmelder handeln. Ist die Vorrichtung nicht verfügbar, so kann z. B. aus Sicherheitsgründen vorgesehen sein, dass die Türverriegelungseinheit in den Freigabezustand zu wechseln hat.

Der Datenbereich kann ein Vorrichtungs-Bit umfassen, das der Vorrichtung zugeordnet ist. Der Teilnehmer, der Kenntnis von dem Zustand der Vorrichtung hat, setzt das Vorrichtungs-Bit in den dominanten Zustand, sofern es dem entsprechenden Zustand der Vorrichtung entspricht, insbesondere sofern die Vorrichtung verfügbar ist. Bei dem Teilnehmer, der Kenntnis von dem Zustand der Vorrichtung hat, kann es sich insbesondere um den ersten Teilnehmer handeln. Entspricht die Vorrichtung nicht dem Zustand, der durch das Setzen des dominanten Zustands des Vorrichtungs-Bits abgebildet wird, insbesondere ist die Vorrichtung nicht verfügbar, so setzt der Teilnehmer, der Kenntnis von dem Zustand der Vorrichtung hat, das Vorrichtungs-Bit in den rezessiven Zustand oder belässt das Vorrichtungs-Bit in dem rezessiven Zustand. Die erste Alternative kann von dem ersten Teilnehmer realisiert werden. Die zweite Alternative kann von einem der übrigen Teilnehmer realisiert werden, sofern der Teilnehmer Kenntnis von dem Zustand der Vorrichtung hat. Das entsprechend dem Zustand der Vorrichtung gesetzte Vorrichtungs-Bit ist in derselben Zustandserkennungs-Nachricht enthalten, in dem zumindest ein Teilnehmer-Bit von dem dazugehörigen Teilnehmer gesetzt wird. Das Vorrichtungs-Bit wird insbesondere während des Sendens der Zustandserkennungs-Nachricht gesetzt. Eine vorteilhafte Ausgestaltung sieht vor, dass der erste Teilnehmer eine Kommunikationsschnittstelle einer Steuereinheit einer Verriegelungsanlage ist, ein als Kommunikationsschnittstelle von einer Einrichtung der Verriegelungsanlage ausgebildeter zweiter Teilnehmer des Kommunikationsbusses die Zustandserkennungs-Nachricht empfängt und der dritte Teilnehmer eine Kommunikationsschnittstelle einer Türverriegelungseinheit ist. Der zweite Teilnehmer kann als Betätigungselement, insbesondere als Nottaster ausgebildet sein.

Der erste Teilnehmer und/oder der dritte Teilnehmer bestimmen anhand des Teilnehmer-Bits die Verfügbarkeit des zweiten Teilnehmers. Die Türverriegelungseinheit wird in einen Freigabezustand versetzt, wenn der zweite Teilnehmer nicht verfügbar ist.

Bei einer derartigen Ausgestaltung findet das Verfahren vorteilhafte Anwendung zur Erkennung von Ausfällen bzw. Störungen in einem Verriegelungsanlage. Ferner ist bei dieser Ausgestaltung vorgesehen, dass die die Türverriegelungseinheit in einen Freigabezustand versetzt wird, wenn der zweite Teilnehmer nicht verfügbar ist. Hierdurch kann verhindert werden, dass die Türverriegelungseinheit bei einem Ausfall des zweiten Teilnehmers einen verriegelten Zustand einnimmt und in diesem verbleibt. Somit kann ein unerwünschtes Verschließen von Räumlichkeiten im Fall eines Fehlers in der Verriegelungsanlage verhindert werden.

Es ist denkbar, dass die Verriegelungsanlage mehrere zweite Teilnehmer umfasst. Die mehreren zweiten Teilnehmer können jeweils als Kommunikationsschnittstelle einer Einrichtung der Schließanlange ausgebildet sein. Insbesondere können die zweiten Teilnehmer jeweils als Betätigungselement, insbesondere als Nottaster, ausgebildet sein. Die mehreren zweiten Teilnehmer setzten, sofern verfügbar, jeweils das ihnen zugeordnete Teilnehmer-Bit in den dominanten Zustand. Die Türverriegelungseinheit kann von den mehreren zweiten Teilnehmern den Zustand bestimmen.

In diesem Zusammenhang ist es besonders vorteilhaft, wenn der als Türverriegelungseinheit ausgebildete dritte Teilnehmer prüft, ob er mit dem nicht verfügbaren zweiten Teilnehmer logisch gekoppelt ist und die Türverriegelungseinheit nur dann in einen Freigabe zustand versetzt wird, wenn ein Ausfall eines zweiten Teilnehmers erkannt wird, der mit der Türverriegelungseinheit logisch gekoppelt ist. Hierdurch kann das Freigeben der Türverriegelungseinheit auf solche Fälle beschränkt werden, in denen ein Ausfall eines Teilnehmers erkannt wird, der in einer Wirkverbindung mit der jeweiligen Türverriegelungseinheit steht. Ein unerwünschtes Freigeben von Türverriegelungseinheiten der Verriegelungsanlage, die nicht in Wirkverbindung mit dem ausgefallenen Teilnehmer stehen, wird vermieden. Eine Information über die logische Kopplung des dritten Teilnehmers mit dem nicht verfügbaren zweiten Teilnehmer kann in einer Speichereinheit des dritten Teilnehmers hinterlegt sein. Bevorzugt wird die in der Speichereinheit hinterlegte Information zur Prüfung, ob der dritte Teilnehmer mit dem nicht verfügbaren zweiten Teilnehmer logisch gekoppelt ist, ausgelesen.

Enthält der Datenbereich ein Vorrichtungs-Bit, so kann der dritte Teilnehmer prüfen, ob die Vorrichtung verfügbar ist oder nicht. Ist die Vorrichtung nicht verfügbar, so geht der dritte Teilnehmer in den Freigabezustand. Optional kann der dritte Teilnehmer zuvor prüfen, ob die Vorrichtung dem dritten Teilnehmer logisch zugeordnet ist. Eine derartige Zuordnung kann einer Speichereinheit des dritten Teilnehmers hinterlegt sein. Fehlt eine logische Zuordnung, so kann der dritte Teilnehmer in dem Verriegelungszustand verbleiben.

Zur Lösung der eingangs genannten Aufgabe wird ferner ein Kommunikationsbussystem vorgeschlagen
- mit einem Kommunikationsbus, der einen dominanten oder einen rezessiven Zustand einnehmen kann,
- mit einem ersten Teilnehmer, insbesondere einem Master-Teilnehmer, der dazu eingerichtet ist, eine Zustandserkennungs-Nachricht über den Kommunikationsbus zu senden, wobei die Zustandserkennungs-Nachricht einen Datenbereich umfasst, wobei der Datenbereich zumindest ein Teilnehmer-Bit aufweist, das einem zweiten Teilnehmer des Kommunikationsbusses zugeordnet ist und wobei der erste Teilnehmer dazu einrichtet ist, das Teilnehmer-Bit auf den rezessiven Zustand zu setzen, und
- mit einem zweiten Teilnehmer, der dazu eingerichtet ist, die Zustandserkennungs-Nachricht zu empfangen und das Teilnehmer-Bit, das dem zweiten Teilnehmer zugeordnet ist, auf den dominanten Zustand zu setzen, während der zweite Teilnehmer die Zustandserkennungs-Nachricht empfängt,
- wobei der erste Teilnehmer und/oder ein dritter Teilnehmer des Kommunikationsbusses dazu eingerichtet ist, die Zustandserkennungs-Nachricht zu empfangen und anhand der Teilnehmer-Bits die Verfügbarkeit des zweiten Teilnehmers zu bestimmen.

Bei dem Kommunikationsbussystem können dieselben Vorteile erreicht werden, wie sie bereits im Zusammenhang mit dem Verfahren zum Erkennen des Zustands, insbesondere der Verfügbarkeit, eines Teilnehmers eines Kommunikationsbusses beschrieben worden sind.

Gemäß einer vorteilhaften Ausgestaltung des Kommunikationsbussystems weist dieses mehrere Teilnehmer, insbesondere mehrere zweite Teilnehmer, auf, die dazu eingerichtet sind, die Zustandserkennungs-Nachricht zu empfangen und ein Teilnehmer-Bit zu, das dem jeweiligen Teilnehmer zugeordnet ist, auf den dominanten Zustand zu setzen, wobei der erste Teilnehmer und/oder der dritte Teilnehmer dazu eingerichtet ist, anhand der der Teilnehmer-Bits den Zustand, insbesondere die Verfügbarkeit, der mehreren Teilnehmer, die das Teilnehmer-Bit geändert haben, zu bestimmen. Die Zustandsmeldung der mehrerer Teilnehmer des Kommunikationsbusses kann hierbei anhand derselben Zustandserkennungs-Nachricht erfolgen. Der Datenbereich umfasst bevorzugt eine a-priori bekannte Anzahl an Teilnehmer-Bits, so dass den Teilnehmern des Kommunikationsbusses eine feste Zuordnung der Teilnehmer-Bits zu den jeweiligen Teilnehmern bekannt sein kann. Eine derartige Zuordnung kann beispielsweise in einem Speicher des jeweiligen Teilnehmers hinterlegt sein. Die mehreren Teilnehmer setzen jeweils das ihnen jeweils zugeordneten Teilnehmer-Bit auf den dominanten Zustand, während die Teilnehmer die Zustandserkennungs-Nachricht empfangen.

Auch die die im Zusammenhang mit dem Verfahren beschriebenen vorteilhaften Ausgestaltungen und Merkmale können allein oder in Kombination bei dem Kommunikationsbussystem bzw. der Verriegelungsanlage Anwendung finden.

Ein weiterer Gegenstand der Erfindung ist eine Verriegelungsanlage mit einem vorstehend beschriebenen Kommunikationsbussystem, wobei der erste Teilnehmer eine Kommunikationsschnittstelle einer Steuereinheit der Verriegelungsanlage ist, dier zweite Teilnehmer eine Kommunikationsschnittstelle von einer Einrichtung der Verriegelungsanlage ist und der dritte Teilnehmer eine Kommunikationsschnittstelle einer Türverriegelungseinheit ist, wobei der erste Teilnehmer und/oder der dritte Teilnehmer dazu eingerichtet ist, die Türverriegelungseinheit in einen Freigabezustand zu versetzen, wenn der zweiter Teilnehmer nicht verfügbar ist.

Bevorzugt umfasst die Verriegelungsanlage mehrere zweite Teilnehmer. Die mehreren zweiten Teilnehmer können jeweils als Kommunikationsschnittstelle einer Einrichtung der Schließanlange ausgebildet sein. Insbesondere können die zweiten Teilnehmer jeweils als Betätigungselement, insbesondere als Nottaster, ausgebildet sein. Die mehreren zweiten Teilnehmer setzten, sofern verfügbar, jeweils das ihnen zugeordnete Teilnehmer-Bit in den dominanten Zustand. Die Türverriegelungseinheit kann von den mehreren zweiten Teilnehmern den Zustand bestimmen. Die Türverriegelungseinheit wird in einen Freigabezustand überführt, wenn ein zweiter Teilnehmer nicht verfügbar ist. Bevorzugt wird die Türverriegelungseinheit nur dann in den Freigabezustand überführt, wenn der nicht verfügbare zweite Teilnehmer der Türverriegelungseinheit logisch zugeordnet ist.

Zur Lösung der eingangs beschriebenen Aufgabe wird ferner ein Transceiver für einen Teilnehmer eines Kommunikationsbusses vorgeschlagen, der einen dominanten oder einen rezessiven Zustand einnehmen kann, umfassend eine Steuereinrichtung, die dazu konfiguriert ist,
- eine über den Kommunikationsbus gesendete Zustandserkennungs-Nachricht zu detektieren, welche einen Datenbereich umfasst, der ein Teilnehmer-Bit aufweist, das dem Teilnehmer des Kommunikationsbusses zugeordnet und auf den rezessiven Zustand gesetzt ist, und
- das dem Teilnehmer zugeordnete Teilnehmer-Bit auf den dominanten Zustand zu setzen.

Das Setzen des Teilnehmer-Bits auf den dominanten Zustand geschieht insbesondere, während die Zustandserkennungs-Nachricht gesendet wird.

Mit dem Transceiver können dieselben Vorteile erreicht werden, wie sie bereits im Zusammenhang mit dem Verfahren zum Erkennen der Verfügbarkeit eines Teilnehmers eines Kommunikationsbusses beschrieben worden sind.

Gemäß einer vorteilhaften Ausgestaltung des Transceivers ist die Steuereinrichtung dazu konfiguriert, die über den Kommunikationsbus gesendete Zustandserkennungs-Nachricht anhand eines Headers der Zustandserkennungs-Nachricht zu detektieren. Die Steuereinrichtung kann eine Detektionseinheit zur Detektion des Headers aufweisen. Bevorzugt ist die Detektionseinheit dazu eingerichtet, den Transceiver in einen Verfügbarkeitsrückmeldungs-Modus zu versetzen, sobald der Header der Zustandserkennungs-Nachricht detektiert worden ist. In dem Verfügbarkeitsrückmeldungs-Modus kann der Transceiver das dem Teilnehmer zugeordnete Teilnehmer-Bit auf den dominanten Zustand zu setzen. Dieses geschieht, während die Zustandserkennungs-Nachricht gesendet wird.

Auch die die im Zusammenhang mit dem Verfahren beschriebenen vorteilhaften Ausgestaltungen und Merkmale können allein oder in Kombination bei dem Transceiver Anwendung finden.

Weitere Einzelheiten und Vorteile der Erfindung sollen nachfolgend anhand der in den Figuren gezeigten Ausführungsbeispiele erläutert werden. Hierin zeigt:
- Fig. 1: ein Kommunikationsbussystem in einer schematischen Blockdarstellung;

- Fig. 2: ein Ausführungsbeispiel einer Verfügbarkeitserkennungs-Nachricht in einer schematischen Darstellung; und
- Fig. 3a-c: Details der Verfügbarkeitserkennungs-Nachricht aus Fig. 2 in einer schematischen Darstellung.

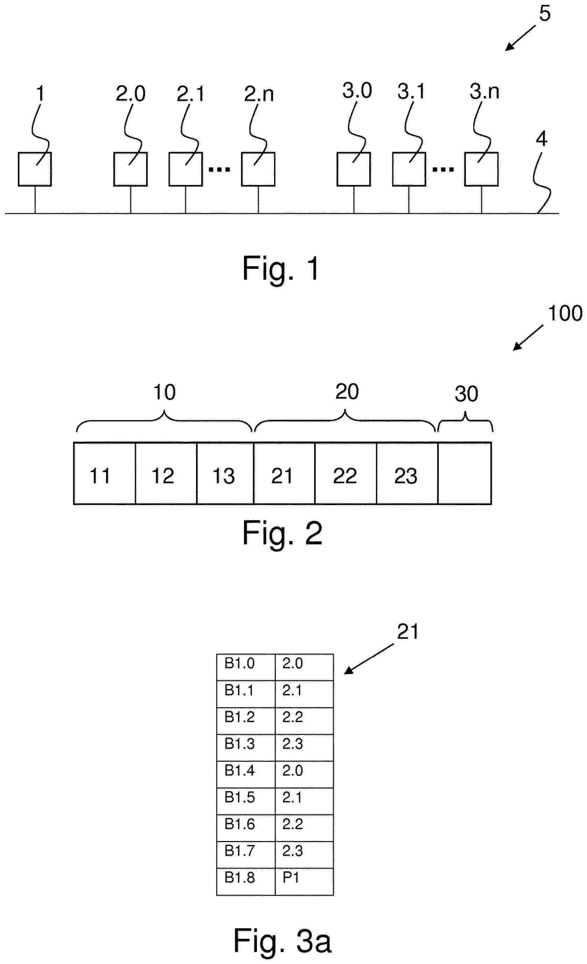

In der Fig. 1 ist ein Blockdiagramm eines Kommunikationsbussystems 5 mit einem Kommunikationsbus 4 gezeigt, der als serieller Kommunikationsbus ausgebildet ist. Der Kommunikationsbus kann z. B. als DCW-Bus ausgestaltet sein. Der Kommunikationsbus 4 kann entweder einen dominanten oder einen rezessiven Zustand einnehmen. Der Kommunikationsbus 4 kann eine Datenleitung oder mehrere Datenleitungen umfassen. Beispielsweise ist es möglich, dass der Kommunikationsbus zwei Datenleitungen umfasst, wobei der dominante und der rezessive Zustand durch eine Differenzspannung zwischen den beiden Datenleitungen definiert ist. Hierbei kann z. B. im rezessiven Zustand eine Differenzspannung von 0 V vorliegen und in dem dominanten Zustand eine Differenzspannung von größer 0 V, beispielsweise 5 V.

Mit dem Kommunikationsbus 4 sind mehrere Teilnehmer 1, 2.0-2.n, 3.0-3.n verbunden. Die verschiedenen Teilnehmer 1, 2.0-2.n, 3.0-3.n führen unterschiedliche Funktionen aus. Die Teilnehmer 1, 2.0-2.n, 3.0-3.n können daher unterschiedlich ausgestaltet sein, wobei sie eingerichtet sind, um jeweils eine spezifische Funktion des erfindungsgemäßen Verfahrens zum Erkennen der Verfügbarkeit eines Teilnehmers 1, 2.0-2.n, 3.0-3.n auszuführen. Alternativ können die Teilnehmer 1, 2.0-2.n, 3.0-3.n identisch ausgebildet und dazu eingerichtet sein, wahlweise eine erste oder eine zweite Funktion des erfindungsgemäßen Verfahrens auszuführen.

Gemäß dem Ausführungsbeispiel ist das Kommunikationsbussystem 5 Teil einer Verriegelungsanlage, die mehrere Türverriegelungseinheiten und mehrere Betätigungselemente aufweist, die beispielsweise als Nottaster ausgebildet sein können. Die Türverriegelungseinheiten können als magnetische oder elektro-mechanische Türverriegelung ausgebildet sein. Bei der Verriegelungsanlage kann es sich um ein Fluchtwegsystem handeln.

Ein erster Teilnehmer 1, der nachfolgend auch als Master-Teilnehmer 1, bezeichnet wird, ist als Kommunikationsschnittstelle einer Steuereinheit der Verriegelungsanlage ausgebildet. Ferner umfasst das Kommunikationsbussystem 5 mehrere zweite Teilnehmer 2.0-2.n, die als Kommunikationsschnittstellen von Einrichtungen der Verriegelungsanlage ausgebildet sind. Gemäß dem Ausführungsbeispiel sind diese Einrichtungen Betätigungselemente, insbesondere Nottaster. Weitere Bestandteile des Kommunikationsbussystems 5 sind mehrere dritte Teilnehmer 3, die jeweils als Kommunikationsschnittstelle einer Türverriegelungseinheit ausgestaltet sind. Diese Türverriegelungseinheiten sind dazu ausgebildet, wahlweise einen Verriegelungszustand oder einen Freigabezustand einzunehmen. in dem Verriegelungszustand einer Türverriegelungseinheit ist eine Tür verriegelt. In dem Freigabezustand ist die Tür nicht verriegelt. In Figur 1 sind jeweils drei zweite Teilnehmer 2.0-2.3 und drei dritte Teilnehmer 3.0-3.3 dargestellt. Dieses ist nur exemplarisch zu sehen. Insbesondere kann die Zahl der zweiten Teilnehmer von der Zahl der dritten Teilnehmer abweichen. So können mehrere Nottaster vorgesehen sein, um dieselbe Türverriegelungseinheit freizugeben oder ein Nottaster kann mehrere Türverriegelungseinheiten freigeben.

Beim Betrieb der Verriegelungsanlage, insbesondere beim Betrieb des Kommunikationsbussystems 5 der Verriegelungsanlage, das anhand Fig. 1 beschrieben wurde, kann ein Verfahren zum Erkennen der Verfügbarkeit eines Teilnehmers 1, 2.0-2.3, 3.0-3.3 des Kommunikationsbusses 4 Anwendung finden, das nachfolgend anhand der Darstellung in **Fig. 2** erläutert werden soll. Diese Darstellung zeigt den Aufbau einer Verfügbarkeitserkennungs-Nachricht 100. Diese gliedert sich in einen Header 10, einen dem Header 10 nachfolgenden Datenbereich 20 und ein Prüfwort 30, welches am Ende der Verfügbarkeitserkennungs-Nachricht 100 angeordnet ist. Der Header 10 ist in drei Teile untergliedert: eine Empfängeradresse 11, eine Senderadresse 12 und einen Nachrichtentyp-Bezeichner 13. Der Datenbereich 20 umfasst mehrere Worte 21, 22, die u.a. Teilnehmer-Bits B1.0-B1.7, B2.0-B2.7umfassen, die einzelnen Teilnehmern 2.0-2.3, 3.0-3.3 des Kommunikationsbussystems 5 zugeordnet sind. Der Datenbereich 20 umfasst des Weiteren ein Wort 23, das mehrere Vorrichtungs-Bits 3.0-3.7 enthält. Das Prüf-Wort 30 ist als LRC-Wort, z. B. als Prüfsumme oder als Paritätswort, ausgebildet.

Um die Verfügbarkeit der Teilnehmer 1, 2.0-2.3, 3.0-3.3 des Kommunikationsbusses 4 in einer möglichst kurzen Zeitspanne zu ermitteln, sendet der Master-Teilnehmer 1 eine Verfügbarkeitserkennungs-Nachricht 100 über den Kommunikationsbus 4, wobei die Verfügbarkeitserkennungs-Nachricht 100 den Datenbereich 20 umfasst. Wie vorstehend erwähnt, weist der Datenbereich 20 mehrere Teilnehmer-Bits B1.0-B1.7, B2.0-B2.7 auf, die jeweils einem Teilnehmer 2.0-2.3, 3.0-3.3 des Kommunikationsbusses 4 zugeordnet sind. Diese Teilnehmer-Bits B1.0-B1.7, B2.0-B2.7 werden durch den Master-Teilnehmer 1 auf den rezessiven Zustand gesetzt.

Die zweiten Teilnehmer 2.0-2.3 und die dritten Teilnehmer 3.0-3.3 empfangen die Verfügbarkeitserkennungs-Nachricht 100. Dabei detektieren die zweiten Teilnehmer 2.0-2.n und die dritten Teilnehmer 3.0-3.n die Verfügbarkeitserkennungs-Nachricht 100 anhand ihres Headers 10. Der Header 10 der Verfügbarkeitserkennungs-Nachricht 100 umfasst hierzu einen eindeutigen Nachrichtentyp-Bezeichner 13, welcher der Verfügbarkeitserkennungs-Nachricht 100 zugeordnet ist und von allen Teilnehmern als solcher erkannt wird. Nach dem Detektieren der Verfügbarkeitserkennungs-Nachricht 100 setzten die einzelnen zweiten Teilnehmer 2.0-2.n dasjenige Teilnehmer-Bit B1.0-B1.7 auf den dominanten Zustand, welches dem jeweiligen zweiten Teilnehmer 2.0-2.3 zugeordnet ist. Entsprechend verfahren die dritten Teilnehmer 3.0-3.3, die jeweils dasjenige Teilnehmer-Bit 2.0-2.7 auf den dominanten Zustand setzen, welches dem jeweiligen dritten Teilnehmer 3.0-3.3 zugeordnet ist. Dieses Setzen der Teilnehmer-Bits durch die zweiten Teilnehmer 2.0-2.3 und die dritten Teilnehmer 3.0-3.3 erfolgt noch während des Sendens der Verfügbarkeitserkennungs-Nachricht 100 durch den Master-Teilnehmer 1. Da der Master-Teilnehmer 1 die Teilnehmer-Bits auf den rezessiven Zustand setzt und die zweiten Teilnehmer 2.0-2.n und die dritten Teilnehmer 3.0-3.n die ihnen zugeordneten Teilnehmer-Bits mit dem dominanten Zustand überschreiben, werden Kollisionen beim Schreiben auf den Kommunikationsbus 4 ausgeschlossen.

Anders ausgedrückt, wird zunächst ein Spannungsverlauf, der dem Header 10 entspricht, von dem ersten Teilnehmer 1 auf den Kommunikationsbus 4 angelegt. Der Spannungsverlauf des Headers 10 wird von den zweiten und den dritten Teilnehmer 2.0-2.3, 3.0-3.3 detektiert. Hierdurch wissen die zweiten und die dritten Teilnehmer 2.0-2.3, 3.0-3.3, dass eine Verfügbarkeitserkennungs-Nachricht 100 gesendet wird. Die zweiten und die dritten Teilnehmer 2.0-2.3, 3.0-3.3 beteiligen sich an der Generation der Verfügbarkeitserkennungs-Nachricht 100, indem die zweiten und die dritten Teilnehmer 2.0-2.3,3.0-3.3 die Verfügbarkeitserkennungs-Nachricht 100 ändern. Die zweiten und die dritten Teilnehmer 2.0-2.3, 3.0-3.3 wissen jeweils, welche Stellung das den einzelnen zweiten und dritten Teilnehmern 2.0-2.3, 3.0-3.3 zugeordnete Teilnehmer-Bit B1.0-B1.7, B2.0-B2.7 in der Verfügbarkeitserkennungs-Nachricht 100 innehat. Somit ist den zweiten und die dritten Teilnehmer 2.0-2.3, 3.0-3.3 bekannt, in welcher zeitlichen Reihenfolge die Teilnehmer-Bit B1.0-B1.7, B2.0-B2.7 zu ändern sind. In dem Beispiel der Fig. 2 und Fig. 3a-c ist z. B. folgt nach dem Header 10 das Bit B1.0 des Teilnehmers 2.0, danach das Bit B1.1 des Teilnehmers 2.1.

Nach dem der Spannungsverlauf des Headers 10 an den Kommunikationsbus 4 angelegt wurde, legen jeweils derjenige zweite oder dritte Teilnehmer 2.0-2.3, 3.0-3.3, dessen Teilnehmer-Bit B1.0-B1.7, B2.0-B2.7 zeitlich folgt, eine Spannung an den Kommunikationsbus 4 an. In dem Ausführungsbeispiel der Fig. 2 und Fig. 3a-c legt zunächst der Teilnehmer 2.0 eine Spannung an, danach der Teilnehmer 2.1. Hierdurch setzt der jeweilige zweite oder dritte Teilnehmer 2.0-2.3, 3.0-3.3 das ihm zugeordnete Teilnehmer-Bit B1.0-B1.7, B2.0-B2.7 auf den dominanten Zustand. In dem Ausführungsbeispiel der Fig. 2 und Fig. 3a-c setzt somit zunächst der Teilnehmer 2.0 das Bit B1.0 auf den dominanten Zustand, danach setz der der Teilnehmer 2.1 das Bit B1.1 auf den dominanten Zustand usw. Hierdurch werden beim Generieren der Verfügbarkeitserkennungs-Nachricht 100 die zweiten und dritten Teilnehmer 2.0-2.3, 3.0-3.3 beteiligt. Anders ausgedrückt, verändern die zweiten und dritten Teilnehmer 2.0-2.3, 3.0-3.3 die Verfügbarkeitserkennungs-Nachricht 100, während der erste Teilnehmer 1 die Verfügbarkeitserkennungs-Nachricht 100 sendet. Noch anders ausgedrückt, verändern die zweiten und die dritten Teilnehmer 2.0-2.3, 3.0-3.3 die Verfügbarkeitserkennungs-Nachricht 100, während die zweiten und die dritten Teilnehmer 2.0-2.3, 3.0-3.3 die Verfügbarkeitsnachricht 100 empfangen.

Die resultierenden Teilnehmer-Bits 1.0-1.7, 2.0-2.7 können durch sämtliche Teilnehmer des Kommunikationsbusses 4 gelesen werden. Das Lesen erfolgt während der Generation der Verfügbarkeitserkennungs-Nachricht 100. So lesen alle Teilnehmer 1, 2.0-2.3, 3.0-3.3 zunächst den Header 10. Danach erlangen alle Teilnehmer 1, 2.0-2.3, 3.0-3.3 Kenntnis von den Teilnehmer-Bits B1.0-B1.7, B2.0-B2.7, sobald die Teilnehmer-Bits B1.0-B1.7, B2.0-B2.7 von den jeweiligen zweiten und dritten Teilnehmern 2.0-2.3, 3.0-3.3 gesetzt sind. Ist ein Teilnehmer 2.0-2.3, 3.0-3.3 ausgefallen, so verharrt das dem ausgefallenen Teilnehmer zugeordnete Teilnehmer-Bit B1.0-B1.7, B2.0-B2.7 in dem rezessiven Zustand, der von dem ersten Teilnehmer 1 gesetzt wurde. Das Lesen erfolgt durch das Abgreifen der Spannung auf dem Kommunikationsbus 4 durch die einzelnen Teilnehmer.

Das Lesen der Verfügbarkeitserkennungs-Nachricht 100 kann dem Empfang gleichgesetzt werden. Somit ist es möglich, dass der Master-Teilnehmer 1 und/oder ein dritter Teilnehmer 3.0-3.3 des Kommunikationsbusses 4 die Verfügbarkeitserkennungs-Nachricht 100 empfängt und anhand der Teilnehmer-Bits B1.0-B1.7 die Verfügbarkeit der zweiten Teilnehmer 2.0-2.3 bestimmt. Dabei wird der jeweilige zweite Teilnehmer 2.0-2.3 als verfügbar bestimmt, wenn das dem zweiten Teilnehmer 2.0-2.n zugeordnete Teilnehmer-Bit B1.0-B1.7 auf den dominanten Zustand gesetzt ist. Ist das dem zweiten Teilnehmer 2.0-2.3 zugeordnete Teilnehmer-Bit B1.0-B1.7 hingegen auf den rezessiven Zustand gesetzt, wird daraus geschlossen, dass der jeweilige zweite Teilnehmer 2.0-2.3 nicht verfügbar ist, was auf einen Ausfall dieses Teilnehmers hindeutet. In dem Ausführungsbeispiel der Figuren empfängt sogar jeder Teilnehmer 1, 2.0-2.3, 3.0-3.3 die Verfügbarkeitserkennungsnachricht 100.

Die Verfügbarkeitserkennungs-Nachricht 100 kann periodisch gesendet werden. Bevorzugt sendet derselbe Master-Teilnehmer 1 die Verfügbarkeitserkennungs-Nachricht 100 periodisch, d.h. in im Wesentlichen identischen Abständen. Gemäß einer Abweichung des Ausführungsbeispiels kann vorgesehen sein, dass die Rolle des Master-Teilnehmers 1 getauscht wird, so dass sich abwechselnd verschiedene Teilnehmer des Kommunikationsbusses als Master-Teilnehmer 1 verhalten und eine Verfügbarkeitserkennungs-Nachricht 100 senden.

Beim Betrieb der Verriegelungsanlage bestimmt der Master-Teilnehmer 1 und/oder der dritte Teilnehmer 3.0-3.3 anhand der Teilnehmer-Bits die Verfügbarkeit der mehreren zweiten Teilnehmer 2.0-2.3, also die Verfügbarkeit der Betätigungselemente, insbesondere Nottaster, der Verriegelungsanlage. Die dritten Teilnehmer 3.0-3.3 entsprechen Kommunikationsschnittstellen verschiedener Türverriegelungseinheiten der Verriegelungsanlage. Dadurch, dass die Verfügbarkeit der Betätigungselemente bestimmt wird, können die Türverriegelungseinheiten in den Freigabezustand versetzt werden, wenn eines der Betätigungselemente nicht verfügbar ist. Gemäß dem Ausführungsbeispiel ist vorgesehen, dass der dritte Teilnehmer prüft, ob er mit dem nicht verfügbaren zweiten Teilnehmer logisch gekoppelt ist und die Türverriegelungseinheit nur dann in einen Freigabezustand versetzt wird, wenn ein Ausfall eines zweiten Teilnehmers erkannt wird, der mit der Türverriegelungseinheit logisch gekoppelt ist. Eine Information über die logische Kopplung des dritten Teilnehmers 3.0-3.3 mit den zweiten Teilnehmern 2.0-2.3 ist in einer Speichereinheit des dritten Teilnehmers 3.0-3.3 hinterlegt. Somit findet das Verfahren zum Erkennen der Verfügbarkeit eines Teilnehmers Anwendung zur Erkennung von Ausfällen bzw. Störungen in der Verriegelungsanlage. Das Verfahren hat den Vorteil, dass die Verfügbarkeit geprüft wird, ohne viele Nachrichten über den Kommunikationsbus 4 senden zu müssen.

Der Detaildarstellung eines ersten Worts 21 des Datenbereichs 20 in Fig. 3a kann entnommen werden, dass der Datenbereich 20 mehrere, hier jeweils genau zwei, Teilnehmer-Bits aufweist, die demselben zweiten Teilnehmer zugeordnet sind. Beispielsweise ist sowohl das Teilnehmer-Bit B1.0 als auch das Teilnehmer-Bit B1.4 einem zweiten Teilnehmer mit dem Bezugszeichen 2.0 zugeordnet. Hierdurch wird eine Redundanz ermöglicht. Denn der Master-Teilnehmer 1 setzt beide Teilnehmer-Bits B1.0, B1.4 auf den rezessiven Zustand und der zweite Teilnehmer mit dem Bezugszeichen 2.0 setzt beide Teilnehmer-Bits B1.0, B1.4 identisch auf den dominanten Zustand. Bei der Auswertung der Teilnehmer-Bits B1.0, B1.4 durch den Master-Teilnehmer 1 und/oder einen dritten Teilnehmer 3.0-3.n kann diese Redundanz herangezogen werden, um zu überprüfen, ob Fehler bei der Übertragung über den Kommunikationsbus 4 aufgetreten sind. Dabei kann ein Fehler erkannt werden, wenn die beiden Teilnehmer-Bits B1.0, B1.4, die demselben zweiten Teilnehmer 2.0-2.3 zugeordnet sind nicht auf einen identischen Zustand (entweder beide rezessiv oder beide dominant) gesetzt sind. Bei einem derartigen Fehler wird die Türverriegelungseinheit, die mit dem fehlerhaften zweiten Teilnehmer verknüpft ist, in den Freigabezustand versetzt.

Ferner ist in Fig. 3a ersichtlich, dass der Datenbereich 20, insbesondere das erste Wort 21 des Datenbereichs 20, ein Paritäts-Bit P1 umfasst. Dieses Paritäts-Bit P1 wird durch den Master-Teilnehmer 1 entsprechend dem Zustand der vorangehenden Teilnehmer-Bits B1.0-B1.7 gesetzt.

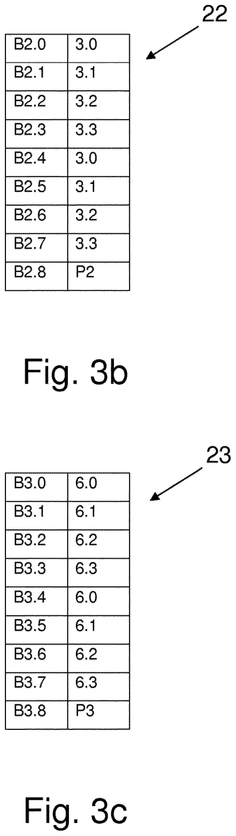

Die Darstellung in **Fig. 3b** zeigt eine Detaildarstellung des zweiten Worts 22 des Datenbereichs 20. Das zweite Wort 22 umfasst mehrere Teilnehmer-Bits B2.0-B2.7, die mehreren dritten Teilnehmern 3.0-3.3 zugeordnet sind. In ähnlicher Weise zeigt **Fig. 3c** des dritten Worts 23 des Datenbereichs 20.

Das dritte Wort 23 umfasst mehrere Vorrichtungs-Bits B3.0-B3.7, die weiteren Vorrichtungen 6.0-6.3 zugeordnet sind, die nicht an den Kommunikationsbus 4 angeschlossen sind. Der erste Teilnehmer 1 hat Kenntnis von der Verfügbarkeit der Vorrichtungen 6.0-6.3. Bei den Vorrichtungen 6.0-6.3 kann es sich z.B. um zentrale Nottaster oder Gefahrenmelder handeln Der erste Teilnehmer 1 kann z. B. über ein weiteres Bussystem Kenntnis von der Verfügbarkeit der Vorrichtungen 6.0-6.3 erlangen. Haben die zweiten und die dritten Teilnehmer 2.0-2.3, 3.0-3.3 jeweils ihre Teilnehmer Bits B1.0-B1.7, B2.0-B2.7 in den Worten 21, 22 gesetzt, so setzt der erste Teilnehmer 1 in dem dritten Wort 23 die dazugehörigen Vorrichtungs-Bits B3.0-B3.7 auf einen dominanten Wert, wenn die dazugehörige Vorrichtung 6.0-6.3 verfügbar ist. Ist die Vorrichtung 6.0-6.3 hingegen ausgefallen, setzt der erste Teilnehmer 1 das dazugehörige Vorrichtungs-Bit B3.0-3.7 auf den rezessiven Wert. Die Vorrichtungs-Bits sind ebenfalls jeweils redundant vorhanden. Die zweiten und dritten Teilnehmer 2.0-2.3, 3.0-3.3 lesen die Vorrichtungs-Bits B3.0-B3.7 des dritten Worts 23. Die Türverriegelungseinheiten gehen in den Freigabezustand, wenn die nicht verfügbare Vorrichtung mit der Türverriegelungseinheit logisch gekoppelt ist. Die logische Kopplung kann in einem Speicher der Türverriegelungseinheit hinterlegt sein.

Die zweiten Teilnehmer 2.0-2.3 lesen die Teilnehmer-Bits B2.0-B2.7 der dritten Teilnehmer 3.0-3.3 und erlangen somit Kenntnis von der Verfügbarkeit der dritten Teilnehmer 3.0-3.3.

Diese Kenntnis können die zweiten Teilnehmer 2.0-2.3 z. B. akustisch oder visuell signalisieren.

Der erste Teilnehmer 1 liest mit, welche Bits in dem Datenbereich 20 von den zweiten und dritten Teilnehmern und ggf. auch von dem ersten Teilnehmer gesetzt worden ist. Aus den gelesenen Bits generiert der erste Teilnehmer den Prüfwert 30.

Die vorstehend beschriebenen Teilnehmer 1, 2.0-2.n, 3.0-3.n des Kommunikationsbusses 4 können einen Transceiver aufweisen, der eine Steuereinrichtung umfasst, welche dazu konfiguriert ist,
- eine über den Kommunikationsbus 4 gesendete Verfügbarkeitserkennungs-Nachricht 100 zu detektieren, welche einen Datenbereich 20 umfasst, der ein Teilnehmer-Bit aufweist, das dem Teilnehmer des Kommunikationsbusses 4 zugeordnet und auf den rezessiven Zustand gesetzt ist, und
- das dem Teilnehmer zugeordnete Teilnehmer-Bit auf den dominanten Zustand zu setzen.

Ferner kann die Steuereinrichtung dazu konfiguriert sein, die über den Kommunikationsbus 4 gesendete Verfügbarkeitserkennungs-Nachricht 100 anhand ihres Headers 10 zu detektieren.

### Bezugszeichen:

- 1: erster Teilnehmer (Master-Teilnehmer)
- 2.0-2.n: zweiter Teilnehmer
- 3.0-3.n: dritter Teilnehmer
- 4: Kommunikationsbus
- 5: Kommunikationsbussystem
- 6.0-6.3: Vorrichtungen
- 10: Header
- 20: Datenbereich
- 21, 22, 23: Wort
- 30: Prüf-Wort
- 100: Verfügbarkeitserkennungs-Nachricht

- B1.0-B1.7: Teilnehmer-Bit
- B1.8: Paritäts-Bit
- B2.0-B2.7: Teilnehmer-Bit
- B2.8: Paritäts-Bit
- B3.0-B3.7: Vorrichtungs-Bit
- B3.8: Paritäts-Bit

## Patentansprüche

1. Verfahren zum Erkennen des Zustands, insbesondere der Verfügbarkeit, eines Teilnehmers (2.0-2.n) eines Kommunikationsbusses (4), der einen dominanten oder einen rezessiven Zustand einnehmen kann, mit den folgenden Verfahrensschritten:
- ein erster Teilnehmer (1), insbesondere ein Master-Teilnehmer, des Kommunikationsbusses (4) sendet eine Zustandserkennungs-Nachricht (100) über den Kommunikationsbus (4), wobei die Zustandserkennungs-Nachricht (100) einen Datenbereich (20) umfasst, wobei der Datenbereich (20) zumindest ein Teilnehmer-Bit (B1.0-B1.7) aufweist, das einem zweiten Teilnehmer (2.0-2.n) des Kommunikationsbusses (4) zugeordnet ist und das zumindest eine Teilnehmer-Bit (B1.0-B1.7) auf den rezessiven Zustand gesetzt wird,
- ein zweiter Teilnehmer (2.0-2.n) des Kommunikationsbusses (4) empfängt die Zustandserkennungs-Nachricht (100) und setzt das zumindest eine Teilnehmer-Bit (B1.0-B1.7), das dem zweiten Teilnehmer (2.0-2.n) zugeordnet ist, auf den dominanten Zustand, während der zweite Teilnehmer (2.0-2.n) die Zustandserkennungs-Nachricht (100) empfängt,
- der erste Teilnehmer (1) und/oder ein dritter Teilnehmer (3.0-3.n) des Kommunikationsbusses (4) empfängt die Zustandserkennungs-Nachricht (100) und bestimmt anhand des Teilnehmer-Bits (B1.0-B1.7) den Zustand des zweiten Teilnehmers (2.0-2.n), **dadurch gekennzeichnet, dass**
- die Zustandserkennungs-Nachricht (100) umfasst ein Prüf-Wort (30), insbesondere ein LRC-Wort, und der erste Teilnehmer (1) empfängt das von dem zweiten Teilnehmer (2.0-2.n) gesetzte Teilnehmer-Bit (B1.0-B1.7) und setzt in Abhängigkeit von dem empfangenen Teilnehmer-Bit (B1.0-B1.7) das Prüf-Wort (30).

2. Verfahren nach Anspruch 1, **dadurch gekennzeichnet, dass** die Zustandserkennungs-Nachricht (100) einen Header (10) umfasst, der bevorzugt vor dem Datenbereich (20) übertragen wird, und der zweite Teilnehmer (2.0-2.n) die Zustandserkennungs-Nachricht (100) anhand des Headers (10) detektiert, insbesondere dass der zweite Teilnehmer (2.0-.n) innerhalb derjenigen Zustandserkennungs-Nachricht (100), die von dem ersten Teilnehmer (1) gesendet wird und den Header (10) umfasst, das Teilnehmer-Bit (B1.0-B1.7), das dem zweiten Teilnehmer (2.0-2.n) zugeordnet ist, auf den dominanten Zustand setzt.

3. Verfahren nach einem der vorhergehenden Ansprüche, **dadurch gekennzeichnet, dass** der zweite Teilnehmer (2.0-2.n) durch den ersten Teilnehmer (1) und/oder den dritten Teilnehmer (3.0-3.n) als verfügbar bestimmt wird, wenn das dem zweiten Teilnehmer (2.0-2.n) zugeordnete Teilnehmer-Bit (B1.0-B1.7) auf den dominanten Zustand gesetzt ist.

4. Verfahren nach einem der vorhergehenden Ansprüche, **dadurch gekennzeichnet, dass** mehrere Teilnehmer (2.0-2.n) des Kommunikationsbusses (4) die Zustandserkennungs-Nachricht (100) empfangen und jeweils zumindest ein ihnen zugeordnetes Teilnehmer-Bit (B1.0-B1.7) auf den dominanten Zustand setzen, wobei der erste Teilnehmer (1) und/oder der dritte Teilnehmer (3.0-3.n) anhand der Teilnehmer-Bits (B1.0-B1.7) den Zustand, insbesondere die Verfügbarkeit, der mehreren Teilnehmer (2.0-2.n) bestimmt.

5. Verfahren nach einem der vorhergehenden Ansprüche, **dadurch gekennzeichnet, dass** der Datenbereich (20) ein Paritäts-Bit (B1.8) umfasst und der erste Teilnehmer (1) das von dem zweiten Teilnehmer (2.0-2.n) gesetzte Teilnehmer-Bit (B1.0-1.7) empfängt und in Abhängigkeit von dem empfangenen Teilnehmer-Bit (B1.0-1.7) das Paritäts-Bit (B1.8) setzt und als Teil der Zustandserkennungs-Nachricht (100) sendet.

6. Verfahren nach einem der vorhergehenden Ansprüche, **dadurch gekennzeichnet, dass** der Datenbereich (20) mehrere, insbesondere genau zwei, Teilnehmer-Bits (B1.0-B1.7) aufweist, die dem zweiten Teilnehmer (2.0-2.n) zugeordnet sind und durch den ersten Teilnehmer (1) auf den rezessiven Zustand gesetzt werden, wobei der zweite Teilnehmer (2.0-2.n) die mehrere Teilnehmer-Bits (B1.0-B1.7) identisch auf den dominanten Zustand setzt.

7. Verfahren nach einem der vorhergehenden Ansprüche, **dadurch gekennzeichnet, dass** ein Teilnehmer (1, 2.0-2.n, 3.0-3.n), insbesondere der erste Teilnehmer (1), Kenntnis von einem Zustand einer Vorrichtung (6.0-6.3) außerhalb des Kommunikationsbus (4) hat und der Datenbereich (20) zumindest ein Vorrichtungs-Bit (B3.0-B3.7) umfasst, das der Vorrichtung (6.0-6.3) zugeordnet ist, und der Teilnehmer (1, 2.0-2.n, 3.0-3.n), der Kenntnis von dem Zustand der Vorrichtung (6.0-6.3) hat, das Vorrichtungs-Bit (B3.0-B3.7) gemäß dem Zustand der Vorrichtung (6.0-6.3) setzt.

8. Verfahren nach einem der vorhergehenden Ansprüche, **dadurch gekennzeichnet, dass** der erste Teilnehmer (1) eine Kommunikationsschnittstelle einer Steuereinheit einer Verriegelungsanlage ist, ein als Kommunikationsschnittstelle einer Einrichtung der Verriegelungsanlage ausgebildeter zweiter Teilnehmer (2.0-2.n) des Kommunikationsbusses (4) die Verfügbarkeitserkennungs-Nachricht (100) empfängt und der dritte Teilnehmer (3.0-3.n) eine Kommunikationsschnittstelle einer Türverriegelungseinheit ist, wobei der erste Teilnehmer (1) und/oder der dritte Teilnehmer (3.0-3.n) anhand des Teilnehmer-Bits (B1.0-B1.3) die Verfügbarkeit des zweiten Teilnehmers (2.0-2.n) bestimmt und die Türverriegelungseinheit in einen Freigabezustand versetzt wird, wenn der zweiter Teilnehmer (2.0-2.n) nicht verfügbar ist.

9. Verfahren nach Anspruch 8, **dadurch gekennzeichnet, dass** der als Kommunikationsschnittstell der Türverriegelungseinheit ausgebildete dritte Teilnehmer (3.0-3.n) prüft, ob er mit dem nicht verfügbaren zweiten Teilnehmer (2.0-2.n) logisch gekoppelt ist und die Türverriegelungseinheit nur dann in einen Freigabezustand versetzt wird, wenn ein Ausfall des zweiten Teilnehmers (2.0-2.n) erkannt wird, der mit der Türverriegelungseinheit logisch gekoppelt ist.

10. Kommunikationsbussystem (5)
- mit einem Kommunikationsbus (4), der einen dominanten oder einen rezessiven Zustand einnehmen kann,
- mit einem ersten Teilnehmer (1), insbesondere einem Master-Teilnehmer, der dazu eingerichtet ist, eine Zustandserkennungs-Nachricht (100) über den Kommunikationsbus (4) zu senden, wobei die Zustandserkennungs-Nachricht (100) einen Datenbereich (20) umfasst, wobei der Datenbereich (20) zumindest ein Teilnehmer-Bit (B1.0-B1.7) aufweist, das einem zweiten Teilnehmer (2.0-2.n) des Kommunikationsbusses (4) zugeordnet ist und wobei der erste Teilnehmer (1) dazu eingerichtet ist, das Teilnehmer-Bit (B1.0-B1.7) auf den rezessiven Zustand zu setzen, und
- mit einem zweiten Teilnehmer (2.0-2.n), der dazu eingerichtet ist, die Zustandserkennungs-Nachricht (100) zu empfangen und das zumindest eine Teilnehmer-Bit (B1.0-B1.7), das dem zweiten Teilnehmer (2.0-2.n) zugeordnet ist, auf den dominanten Zustand zu setzen, während der zweite Teilnehmer (2.0-2.n) die Zustandserkennungs-Nachricht (100) empfängt,
- wobei der erste Teilnehmer (1) und/oder ein dritter Teilnehmer (3.0-3.n) des Kommunikationsbusses (4) dazu eingerichtet ist, die Zustandserkennungs-Nachricht (100) zu empfangen und anhand des zumindest einen Teilnehmer-Bits (B1.0-B1.7) die Verfügbarkeit des zweiten Teilnehmers (2.0-2.n) zu bestimmen, **dadurch gekennzeichnet, dass**
- die Zustandserkennungs-Nachricht (100) ein Prüf-Wort (30), insbesondere ein LRC-Wort, umfasst und der erste Teilnehmer (1) dazu eingerichtet ist das von dem zweiten Teilnehmer (2.0-2.n) gesetzte Teilnehmer-Bit (B1.0-B1.7) zu empfangen und in Abhängigkeit von dem empfangenen Teilnehmer-Bit (B1.0-B1.7) das Prüf-Wort (30) zu setzen.

11. Kommunikationsbussystem (5) nach Anspruch 11, **dadurch gekennzeichnet, dass** das Kommunikationsbussystem (5) mehrere Teilnehmer (2.0-2.n) aufweist, die dazu eingerichtet sind, die Zustandserkennungs-Nachricht (100) zu empfangen und ein Teilnehmer-Bit (B1.0-B1.7), das dem jeweiligen Teilnehmer (2.0-2.n) zugeordnet ist, auf den dominanten Zustand zu setzen, wobei der erste Teilnehmer (1) und/oder der dritte Teilnehmer (3.0-3.n) dazu eingerichtet ist, anhand der Teilnehmer-Bits (B1.0-B1.3) den Zustand, insbesondere die Verfügbarkeit, der mehreren Teilnehmer (2.0-2.n) zu bestimmen.

12. Verriegelungsanlage mit einem Kommunikationsbussystem (5) nach Anspruch 10 oder 11, wobei der erste Teilnehmer (1) eine Kommunikationsschnittstelle einer Steuereinheit der Verriegelungsanlage ist, der zweite Teilnehmer (2.0-2.n) eine Kommunikationsschnittstelle einer Einrichtung der Verriegelungsanlage ist und der dritte Teilnehmer (3.0-3.n) eine Kommunikationsschnittstelle einer Türverriegelungseinheit ist, wobei der erste Teilnehmer (1) und/oder der dritte Teilnehmer (3.0-3.n) dazu eingerichtet ist, die Türverriegelungseinheit in einen Freigabezustand zu versetzen, wenn der zweiter Teilnehmer (2.0-2.n) nicht verfügbar ist.

## Claims

1. A method for detecting the state, in particular the availability, of a participant (2.0-2.n) of a communication bus (4), which can assume a dominant or a recessive state, having the following method steps:
- a first participant (1), in particular a master participant, of the communication bus (4) sends a state detection message (100) via the communication bus (4), wherein the state detection message (100) comprises a data area (20), wherein the data area (20) has at least one participant bit (B1.0-B1.7), which is assigned to a second participant (2.0-2.n) of the communication bus (4), and the at least one participant bit (B1.0-B1.7) is set to the recessive state,
- a second participant (2.0-2.n) of the communication bus (4) receives the state detection message (100) and sets the at least one participant bit (B1.0-B1.7), which is assigned to the second participant (2.0-2.n), to the dominant state while the second participant (2.0-2.n) receives the state detection message (100),
- the first participant (1) and/or a third participant (3.0-3.n) of the communication bus (4) receives the state detection message (100) and determines the state of the second participant (2.0-2.n) based on the participant bit (B1.0-B1.7), **characterised in that**
- the state detection message (100) comprises a check word (30), in particular an LRC word, and the first participant (1) receives the participant bit (B1.0-B1.7) set by the second participant (2.0-2.n) and sets the check word (30) depending on the received participant bit (B1.0-B1.7).

2. The method according to claim 1, **characterised in that** the state detection message (100) comprises a header (10), which is preferably transmitted before the data area (20), and the second participant (2.0-2.n) detects the state detection message (100) based on the header (10), in particular **in that** the second participant (2.0-.n) sets the participant bit (B1.0-B1.7), which is assigned to the second participant (2.0-2.n), to the dominant state within the state detection message (100) which is sent by the first participant (1) and comprises the header (10).

3. The method according to one of the preceding claims, **characterised in that** the second participant (2.0-2.n) is determined as available by the first participant (1) and/or the third participant (3.0-3.n) if the participant bit (B1.0-B1.7) assigned to the second participant (2.0-2.n) is set to the dominant state.

4. The method according to one of the preceding claims, **characterised in that** a plurality of participants (2.0-2.n) of the communication bus (4) receive the state detection message (100) and each set at least one participant bit (B1.0-B1.7) assigned to them to the dominant state, wherein the first participant (1) and/or the third participant (3.0-3.n) determines the state, in particular the availability, of the plurality of participants (2.0-2.n) based on the participant bits (B1.0-B1.7).

5. The method according to one of the preceding claims, **characterised in that** the data area (20) comprises a parity bit (B1.8) and the first participant (1) receives the participant bit (B1.0-1.7) set by the second participant (2.0-2.n) and, depending on the received participant bit (B1.0-1.7), sets the parity bit (B1.8) and sends it as part of the state detection message (100).

6. The method according to one of the preceding claims, **characterised in that** the data area (20) has a plurality of, in particular exactly two, participant bits (B1.0-B1.7) which are assigned to the second participant (2.0-2.n) and are set to the recessive state by the first participant (1), wherein the second participant (2.0-2.n) sets the plurality of participant bits (B1.0-B1.7) identically to the dominant state.

7. The method according to one of the preceding claims, **characterised in that** a participant (1, 2.0-2.n, 3.0-3.n), in particular the first participant (1), has knowledge of a state of a device (6.0-6.3) outside the communication bus (4) and the data area (20) comprises at least one device bit (B3.0-B3.7), which is assigned to the device (6.0-6.3), and the participant (1, 2.0-2.n, 3.0-3.n) that has knowledge of the state of the device (6.0-6.3) sets the device bit (B3.0-B3.7) according to the state of the device (6.0-6.3).

8. The method according to one of the preceding claims, **characterised in that** the first participant (1) is a communication interface of a control unit of a locking system, a second participant (2.0-2.n) of the communication bus (4) designed as a communication interface of a device of the locking system receives the availability detection message (100) and the third participant (3.0-3.n) is a communication interface of a door locking unit, wherein the first participant (1) and/or the third participant (3.0-3.n) determines the availability of the second participant (2.0-2.n) based on the participant bit (B1.0-B1.3) and the door locking unit is put into a release state if the second participant (2.0-2.n) is not available.

9. The method according to claim 8, **characterised in that** the third participant (3.0-3.n) designed as a communication interface of the door locking unit checks whether it is logically coupled to the unavailable second participant (2.0-2.n) and the door locking unit is only put into a release state if a failure of the second participant (2.0-2.n) is detected, which is logically coupled to the door locking unit.

10. A communication bus system (5)
- having a communication bus (4) which can assume a dominant or a recessive state,
- having a first participant (1), in particular a master participant, which is configured to send a state detection message (100) via the communication bus (4), wherein the state detection message (100) comprises a data area (20), wherein the data area (20) has at least one participant bit (B1.0-B1.7) which is assigned to a second participant (2.0-2.n) of the communication bus (4) and wherein the first participant (1) is configured to set the participant bit (B1.0-B1.7) to the recessive state, and
- having a second participant (2.0-2.n) which is configured to receive the state detection message (100) and to set the at least one participant bit (B1.0-B1.7), which is assigned to the second participant (2.0-2.n), to the dominant state while the second participant (2.0-2.n) receives the state detection message (100),
- wherein the first participant (1) and/or a third participant (3.0-3.n) of the communication bus (4) is configured to receive the state detection message (100) and to determine the availability of the second participant (2.0-2.n) based on the at least one participant bit (B1.0-B1.7), **characterised in that**
- the state detection message (100) comprises a check word (30), in particular an LRC word, and the first participant (1) is configured to receive the participant bit (B1.0-B1.7) set by the second participant (2.0-2.n) and to set the check word (30) depending on the received participant bit (B1.0-B1.7).

11. The communication bus system (5) according to claim 11, **characterised in that** the communication bus system (5) has a plurality of participants (2.0-2.n) which are configured to receive the state detection message (100) and to set a participant bit (B1.0-B1.7), which is assigned to the respective participant (2.0-2.n), to the dominant state, wherein the first participant (1) and/or the third participant (3.0-3.n) is configured to determine the state, in particular the availability, of the plurality of participants (2.0-2.n) based on the participant bits (B1.0-B1.3).

12. A locking system with a communication bus system (5) according to claim 10 or 11, wherein the first participant (1) is a communication interface of a control unit of the locking system, the second participant (2.0-2.n) is a communication interface of a device of the locking system and the third participant (3.0-3.n) is a communication interface of a door locking unit, wherein the first participant (1) and/or the third participant (3.0-3.n) is configured to put the door locking unit into a release state if the second participant (2.0-2.n) is not available.

## Revendications

1. Procédé de détection de la condition, en particulier de la disponibilité, d'un participant (2.0-2.n) d'un bus de communication (4), qui peut adopter une condition dominante ou récessive, comportant les étapes de procédé suivantes :
- un premier participant (1), en particulier un participant-maître, du bus de communication (4) envoie un message de détection de condition (100) par le biais du bus de communication (4), dans lequel le message de détection de condition (100) comprend une zone de données (20), dans lequel la zone de données (20) présente au moins un bit de participant (B1.0-B1.7), qui est affecté à un deuxième participant (2.0 à 2.n) du bus de communication (4) et l'au moins un bit de participant (B1.0 à B1.7) est défini dans la condition récessive,
- un deuxième participant (2.0-2.n) du bus de communication (4) reçoit le message de détection de condition (100) et définit l'au moins un bit de participant (B1.0-B1.7), qui est affecté au deuxième participant (2.0-2.n), dans la condition dominante, tandis que le deuxième participant (2.0-2.n) reçoit le message de détection de condition (100),
- le premier participant (1) et/ou un troisième participant (3.0-3.n) du bus de communication (4) reçoit le message de détection de condition (100) et détermine la condition du deuxième participant (2.0-2.n) à l'aide du bit de participant (B1.0-B1.7), **caractérisé en ce que**
- le message de détection de condition (100) comprend un mot de vérification (30), en particulier un mot LRC, et le premier participant (1) reçoit le bit de participant (B1.0-B1.7) défini par le deuxième participant (2.0-2.n) et définit le mot de vérification (30) en fonction du bit de participant (B1.0-B1.7) reçu.

2. Procédé selon la revendication 1, **caractérisé en ce que** le message de détection de condition (100) comprend un en-tête (10), qui est transmis de préférence avant la zone de données (20), et le deuxième participant (2.0-2.n) découvre le message de détection de condition (100) à l'aide de l'en-tête (10), en particulier que le deuxième participant (2.0-.n) définit, au sein du message de détection de condition (100), qui est envoyé par le premier participant (1) et comprend l'en-tête (10), le bit de participant (B1.0-B1.7), qui est affecté au deuxième participant (2.0-2.n), dans la condition dominante.

3. Procédé selon l'une des revendications précédentes, **caractérisé en ce que** le deuxième participant (2.0-2.n) est déterminé comme disponible par le premier participant (1) et/ou le troisième participant (3.0-3.n), si le bit de participant (B1.0-B1.7) affecté au deuxième participant (2.0-2.n) est défini dans la condition dominante.

4. Procédé selon l'une des revendications précédentes, **caractérisé en ce que** plusieurs participants (2.0-2.n) du bus de communication (4) reçoivent le message de détection de condition (100) et définissent respectivement au moins un bit de participant (B1.0-B1.7) qui leur est affecté dans la condition dominante, dans lequel le premier participant (1) et/ou le troisième participant (3.0-3.n) déterminent, à l'aide des bits de participant (B1.0-B1.7), la condition, en particulier la disponibilité, des plusieurs participants (2.0-2.n).

5. Procédé selon l'une des revendications précédentes, **caractérisé en ce que** la zone de données (20) comprend un bit de parité (B1.8) et le premier participant (1) reçoit le bit de participant (B1.0-1.7) défini par le deuxième participant (2.0-2.n) et en fonction du bit de participant (B1.0-1.7) reçu, définit le bit de parité (B1.8) et l'envoie en tant que partie du message de détection de condition (100).

6. Procédé selon l'une des revendications précédentes, **caractérisé en ce que** la zone de données (20) présente plusieurs, en particulier exactement deux, bits de participant (B1.0-B1.7), qui sont affectés au deuxième participant (2.0-2.n) et sont définis dans la condition récessive par le premier participant (1), dans lequel le deuxième participant (2.0-2.n) définit les plusieurs bits de participant (B1.0-B1.7) de manière identique dans la condition dominante.

7. Procédé selon l'une des revendications précédentes, **caractérisé en ce qu'**un participant (1, 2.0-2.n, 3.0-3.n), en particulier le premier participant (1), a connaissance d'une condition d'un appareil (6.0 à 6.3) en dehors du bus de communication (4) et la zone de données (20) comprend au moins un bit d'appareil (B3.0 à B3.7), qui est affecté à l'appareil (6.0-6.3), et le participant (1, 2.0-2.n, 3.0-3.n), qui a connaissance de la condition de l'appareil (6.0-6.3), définit le bit d'appareil (B3.0-B3.7) en fonction de la condition de l'appareil (6.0-6.3).

8. Procédé selon l'une des revendications précédentes, **caractérisé en ce que** le premier participant (1) est une interface de communication d'une unité de commande d'un système de verrouillage, un deuxième participant (2.0-2.n) du bus de communication (4), conçu comme interface de communication d'un dispositif du système de verrouillage, reçoit le message de détection de disponibilité (100) et le troisième participant (3.0-3.n) est une interface de communication d'une unité de verrouillage de porte, dans lequel le premier participant (1) et/ou le troisième participant (3.0-3.n) déterminent la disponibilité du deuxième participant (2.0-2.n) à l'aide du bit de participant (B1.0-B1.3) et l'unité de verrouillage de porte est définie dans une condition de déverrouillage, si le deuxième participant (2.0-2.n) n'est pas disponible.

9. Procédé selon la revendication 8, **caractérisé en ce que** le troisième participant (3.0-3.n), conçu comme interface de communication de l'unité de verrouillage de porte, vérifie, s'il est logiquement couplé au deuxième participant (2.0-2.n) indisponible et l'unité de verrouillage de porte est alors seulement définie dans une condition de déverrouillage, si une défaillance du deuxième participant (2.0-2.n), qui est logiquement couplé à l'unité verrouillage de porte, est détectée.

10. Système de bus de communication (5)
- comportant un bus de communication (4), qui peut adopter une condition dominante ou récessive,
- comportant un premier participant (1), en particulier un participant-maître, qui est conçu pour envoyer un message de détection de condition (100) par l'intermédiaire du bus de communication (4), dans lequel le message de détection de condition (100) comprend une zone de données (20), dans lequel la zone de données (20) présente au moins un bit de participant (B1.0-B1.7), qui est affecté à un deuxième participant (2.0-2.n) du bus de communication (4) et dans lequel le premier participant (1) est conçu pour définir le bit de participant (B1.0-B1.7) dans la condition récessive, et
- comportant un deuxième participant (2.0-2.n), qui est conçu pour recevoir le message de détection de condition (100) et définir l'au moins un bit de participant (B1.0-B1.7), qui est affecté au deuxième participant (2.0-2.n), dans la condition dominante, tandis que le deuxième participant (2.0-2.n) reçoit le message de détection de condition (100),
- dans lequel le premier participant (1) et/ou un troisième participant (3.0-3.n) du bus de communication (4) est conçu pour recevoir le message de détection de condition (100) et déterminer la disponibilité du deuxième participant (2.0-2.n) à l'aide de l'au moins un bit de participant (B1.0-B1.7), **caractérisé en ce que**
- le message de détection de condition (100) comprend un mot de vérification (30), en particulier un mot LRC, et le premier participant (1) est conçu pour recevoir le bit de participant (B1.0-B1.7) défini par le deuxième participant (2.0-2.n) et, en fonction du bit de participant (B1.0-B1.7) reçu, pour définir le mot de vérification (30).

11. Système de bus de communication (5) selon la revendication 11, **caractérisé en ce que** le système de bus de communication (5) présente plusieurs participants (2.0-2.n), qui sont conçus pour recevoir le message de détection de condition (100) et définir un bit de participant (B1.0-B1.7), qui est affecté au participant (2.0-2.n) respectif, dans la condition dominante, dans lequel le premier participant (1) et/ou le troisième participant (3.0-3.n) est conçu pour à l'aide des bits de participant (B1.0-B1.3), déterminer la condition, en particulier la disponibilité, des plusieurs participants (2.0-2.n).

12. Système de verrouillage comportant un système de bus de communication (5) selon la revendication 10 ou 11, dans lequel le premier participant (1) est une interface de communication d'une unité de commande du système de verrouillage, le deuxième participant (2.0-2.n) est une interface de communication d'un dispositif du système de verrouillage et le troisième participant (3.0-3.n) est une interface de communication d'une unité de verrouillage de porte, dans lequel le premier participant (1) et/ou le troisième participant (3.0-3.n) est conçu pour définir l'unité de verrouillage de porte dans une condition de déverrouillage, si le deuxième participant (2.0-2.n) n'est pas disponible.
